# EUROPÄISCHE PATENTSCHRIFT

(11) **EP 3 036 115 B1**
(45) Veröffentlichungstag und Bekanntmachung des Hinweises auf die Patenterteilung: **13.06.2018**
(21) Anmeldenummer: 14717142.5
(22) Anmeldetag: 14.04.2014
(51) Int. Cl.: B60C 9/20

(54) **FAHRZEUGLUFTREIFEN**
PNEUMATIC VEHICLE TYRE
PNEU DE VÉHICULE

(30) Priorität: 15.07.2013 DE 102013107476
(43) Veröffentlichungstag der Anmeldung: 29.06.2016
(73) Patentinhaber: Continental Reifen Deutschland GmbH, 30165 Hannover (DE)
(72) Erfinder: JOHN, Jakob, 30171 Hannover (DE); LACKO, Michal, 020 01 Puchov (SK); BISPO, Miguel, 30177 Hannover (DE); OWENS, Bridget, 30159 Hannover (DE)
(74) Vertreter: Finger, Karsten
(86) Internationale Anmeldenummer: PCT/EP2014/057458
(87) Internationale Veröffentlichungsnummer: WO 2015/007403

(56) Entgegenhaltungen:
- DE-A1-102011 001 228
- US-A1- 2006 169 381

## Beschreibung

Die Erfindung betrifft einen Fahrzeugluftreifen in Radialbauart für Nutzfahrzeuge, insbesondere Lastkraftwagen, Busse und Lastkraftwagenanhänger, mit einem fünflagigen Gürtel, dessen Gürtellagen Festigkeitsträger enthalten, die in jeder Gürtellage jeweils parallel zueinander verlaufen, wobei die dritte Gürtellage eine 0°-Lage ist, deren Breite geringer ist als die Breite der an sie unmittelbar anschließenden Gürtellagen, welche Arbeitslagen sind, wobei die Festigkeitsträger in den einen, der 0°-Lage benachbarten Gürtellagen rechtssteigend und die Festigkeitsträger in den anderen der 0°-Lage benachbarten Gürtellagen linkssteigend verlaufen und die beiden jeweils radial innerhalb und radial außerhalb der 0°-Lage angeordneten Gürtellagen jeweils übereinstimmende Steigungen aufweisen, wobei der Winkel, den die Festigkeitsträger in der fünften Gürtellage mit der Umfangsrichtung des Reifens einschließen, 35° bis 70° beträgt, und dass die Festigkeitsträger in den beiden Arbeitslagen eine Dehnung ≥ 0,2% bei 10% Bruchlast aufweisen, wobei die Dehnung mit Festigkeitsträgern gemessen wird, die dem fertig vulkanisierten Reifen entnommen sind.

Ein Fahrzeugluftreifen der eingangs genannten Art ist beispielsweise aus der DE 2011 011 288 A1 bekannt. Ein weiterer Fahrzeugluftreifen mit einem fünflagigen Gürtel ist in der US 2006/0169381 A1 offenbart. Bei den aus diesen Dokumenten bekannten fünflagigen Gürteln ist jeweils die dritte Gürtellage als 0°-Lage ausgeführt, deren Breite geringer ist als die Breite der an sie unmittelbar angrenzenden Gürtellagen. Die Festigkeitsträger der ersten und der zweiten Gürtellage weisen zu den Festigkeitsträgern der vierten und der fünften Gürtellage eine entgegengesetzte Steigung auf.

Aus der DE 10 2010 000 181 A1 ist ein Fahrzeugluftreifen bekannt, dessen Gürtel mindestens vier Lagen aufweist, wobei jede Gürtellage als Festigkeitsträger Stahlkorde enthält, die in der radial äußersten Gürtellage und in der dieser benachbarten, zweitäußersten Gürtellage jeweils gleichsteigend verlaufen. Der Winkel, den die Stahlkorde in der radial äußersten Gürtellage mit dem Reifenäquator einschließen, ist um 6° bis 15° größer als der Winkel, den die Stahlkorde in der zweitäußersten Gürtellage mit dem Reifenäquator einschließen. Durch diese Maßnahme soll eine Reduktion des Rollwiderstandes erzielt werden, die über die gesamte Lebensdauer des Reifens erhalten und somit wirksam bleibt.

Aus der EP 0 963 301 B1 ist eine ermüdungsbeständige Gürtelkonstruktion für Zwillingsreifen bildende Reifen für die Antriebsachse von Schwertlastfahrzeugen bekannt. Der Gürtel weist mindestens zwei Arbeitslagen aus undehnbaren Korden auf, die zueinander überkreuz verlaufen und zur Umfangsrichtung Winkel bilden, die 10° bis 45° betragen. Zwischen der Radialkarkasse und der radial inneren Arbeitslage befindet sich eine Gürtellage aus undehnbaren Stahlkorden, die mit der Umfangsrichtung einen Winkel von mindestens 60° einschließen. Zwischen den beiden Arbeitslagen ist eine zusätzliche Lage angeordnet, die Stahlkorde enthält, die im Wesentlichen in Umfangsrichtung ausgerichtet sind. Auf der radial am weitesten außen liegenden Arbeitslage und an jeder Seite des Reifens ist je eine zweite, zusätzliche Lage angeordnet, die ebenfalls Stahlkorde als Festigkeitsträger enthalten, die im Wesentlichen parallel zur Umfangsrichtung ausgerichtet sind.

Bei einem typischen, als Dreiecksgürtel bekannten Gürtelaufbau für Schwerlastfahrzeuge sind vier Gürtellagen mit Stahlkorden als Festigkeitsträger vorgesehen, wobei die Stahlkorde in der ersten und in der zweiten Gürtellage übereinstimmende Steigungsrichtungen aufweisen und der Winkel, den die Stahlkorde in der ersten Gürtellage mit der Umfangsrichtung einschließen, 45° bis 70°, der Winkel, den die Stahlkorde in der zweiten Gürtellage mit der Umfangsrichtung einschließen, 15° bis 26° beträgt. Die Stahlkorde in der dritten und in der vierten Gürtellage haben üblicherweise eine entgegengesetzte Steigungsrichtung, wobei die Winkel, die die Stahlkorde in diesen beiden Gürtellagen mit der Umfangsrichtung einschließen, gleich groß sind und 15° bis 20° betragen. Es ist bekannt, dass die Winkelung der Stahlkorde in den einzelnen Gürtellagen den Abrieb des Laufstreifens beeinflussen kann, die bekannten Gürtelkonstruktionen sind jedoch hinsichtlich eines gleichmäßigen Abriebes verbesserungswürdig.

Der Erfindung liegt somit die Aufgabe zugrunde, einen Fahrzeugluftreifen der eingangs genannten Art mit fünf Gürtellagen im Gürtelverband derart auszuführen, dass der Reifen im Betrieb im Abrieb verbessert ist, insbesondere über seine Laufstreifenbreite einen gleichmäßigen Abrieb aufweist.

Gelöst wird die gestellte Aufgabe erfindungsgemäß dadurch, dass in der ersten Gürtellage Festigkeitsträger verlaufen, deren Dehnung bei 10 % Bruchlast ≥ 0,2 % beträgt, wobei die Dehnung ebenfalls mit Festigkeitsträgern gemessen wird, die dem fertig vulkanisierten Reifen entnommen sind.

Von besonderer Bedeutung für die Erfindung ist die Kombination einer mittleren 0°-Lage im Gürtelverband mit der fünften Gürtellage, deren Festigkeitsträger einen relativ großen Winkel mit der Umfangsrichtung einschließen, sowie mit dehnbaren Festigkeitsträgern in den beiden Arbeitslagen, der zweiten und der vierten Gürtellage. Die 0°-Lage bewirkt eine sehr gute Umfangssteifigkeit und ist für einen gleichmäßigen Abrieb des Laufstreifens in den Schulterbereichen von Vorteil. Die fünfte Gürtellage, deren Festigkeitsträger unter einem relativ großen Winkel zur Umfangsrichtung verlaufen, erhöht die Quersteifigkeit in den seitlichen Laufstreifenbereichen des Reifens und vergleichsmäßigt dadurch vor allem den Abrieb im mittleren Bereich des Laufstreifens. Die Arbeitslagen mit dehnbaren Festigkeitsträgern wirken ausgleichend auf die Umfangs- und die Quersteifigkeit. Durch die Erfindung wird daher ein Reifen mit einem gleichmäßigen Laufstreifenabrieb über seine gesamte Breite zur Verfügung gestellt. Die Festigkeitsträger der ersten Gürtellage sind derart ausgeführt und angeordnet, dass sie die Quersteifigkeit in den seitlichen Laufstreifenbereichen des Reifens mitbeeinflussen.

Gemäß einer bevorzugten Ausführungsform der Erfindung ist die dritte Gürtellage, die 0°-Lage, in axialer Richtung aus mehreren Teillagen aufgebaut. Durch diese Maßnahme kann in den einzelnen Teillagen, beispielsweise durch eine unterschiedliche Vorspannung der Festigkeitsträger, die Umfangsteifigkeit gezielt beeinflusst und damit das Erzielen eines gleichmäßigen Abriebs des Laufstreifens zusätzlich unterstützt werden.

Bei einer weiteren erfindungsgemäßen Ausführungsform beträgt der Winkel, den die Festigkeitsträger in der fünften Gürtellage mit der Umfangsrichtung einschließen, mindestens 43°. Durch diese Maßnahme kann die Quersteifigkeit in den seitlichen Laufstreifenbereichen des Reifens optimiert und dadurch der Abrieb im mittleren Bereich des Laufstreifens noch besser beeinflusst werden.

Die Festigkeitsträger in der zweiten und der vierten Gürtellage, den Arbeitslagen der Gürtelkonstruktion, schließen mit der Umfangsrichtung jeweils einen Winkel ein, welcher 14° bis 30° beträgt. Diese Maßnahme ist für die Gürtelhaltbarkeit von Vorteil.

Eine weitere vorteilhafte Ausgestaltung der Gürtelkonstruktion sieht vor, dass die Festigkeitsträger in der ersten Gürtellage mit der Umfangsrichtung einen Winkel einschließen, welcher 35° bis 70°, insbesondere mindestens 43°, beträgt. Bei einer vorteilhaften Ausführungsform sind auch in der fünften Gürtellage Festigkeitsträger vorgesehen, deren Dehnung bei 10 % Bruchlast ≥ 0,2 % beträgt, wobei die Dehnung dieser Festigkeitsträger ebenfalls mit Festigkeitsträgern ermittelt wird, die dem fertig vulkanisierten Reifen entnommen sind.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Teilquerschnitt eines Fahrzeugluftreifens im Gürtel- und Laufstreifenbereich mit einer Ausführungsvariante der Erfindung und
Fig. 2 eine Draufsicht auf Abschnitte der Gürtellagen aus Fig. 1.

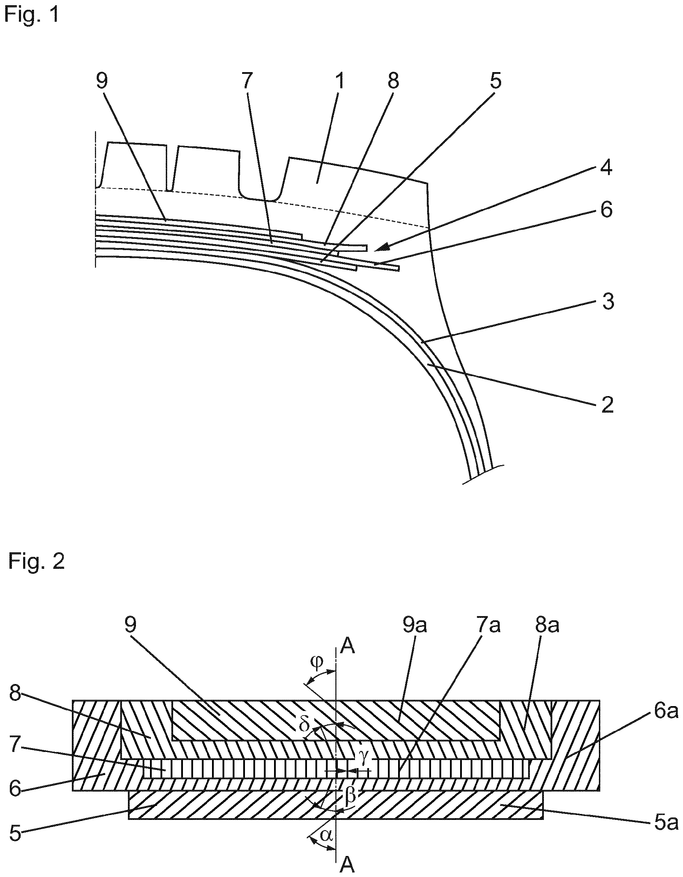

Fig. 1 zeigt einen Querschnitt durch den Laufstreifen- und Gürtelbereich eines Fahrzeugluftreifens für Nutzfahrzeuge, wie beispielsweise Lastkraftwagen, Busse oder Lastkraftwagenanhänger. Von den im gezeigten Bereich des Fahrzeugluftreifens üblicherweise vorhandenen Bauteilen sind ein profilierter Laufstreifen 1, eine Innenschicht 2, eine Karkasseinlage 3 und ein mehrlagiger Gürtel 4 dargestellt. Nicht dargestellt sind die üblicherweise zwischen den Randabschnitten der Gürtellagen, insbesondere im Bereich der Gürtellagenkanten, vorgesehenen Gürtelpolster und dergleichen.

Der Gürtel 4 weist fünf Gürtellagen 5, 6, 7, 8 und 9 auf, wobei die erste Gürtellage die radial innerste Gürtellage 5 ist. Die zweite und die vierte Gürtellage 6 und 8 sind Arbeitslagen, wobei die zweite Gürtellage 6 breiter ist als die vierte. An die vierte Gürtellage 8, welche daher die schmälere Arbeitslage ist, schließt die radial äußerste Gürtellage 9 an, welche eine Breite von mindestens 60 % und von maximal 140 % der Breite der dritten Gürtellage 7 aufweist. Sämtliche Gürtellagen 5, 6, 7, 8 und 9 bestehen aus in eine Gummimischung, der sogenannten Gürtelgummierung, eingebetteten Festigkeitsträgern 5a, 6a, 7a, 8a und 9a, welche in jeder Lage parallel zueinander verlaufen und beispielsweise in an sich bekannter Weise ausgeführte Stahlkorde oder Korde basierend auf Polyamiden (Aramid), Polyestern, Glasfasern oder einem sonstigen geeigneten Material sind. Die Festigkeitsträger können auch Hybridkorde sein, bei denen Filamente oder Garne aus unterschiedlichen Materialien zu einem Kord verarbeitet sind.

Wie Fig. 2 zeigt, verlaufen die Festigkeitsträger 5a, 6a, 7a, 8a und 9a in den Gürtellagen 5, 6, 7, 8 und 9 unter Winkeln α, β, γ, δ und ϕ zu der durch die Linie A-A versinnbildlichten Umfangsrichtung. Die Neigung der Festigkeitsträger 5a, 6a, 7a, 8a und 9a relativ zur Umfangsrichtung A-A ist bei der in Fig. 2 gezeigten Ausführungsform in den einzelnen Gürtellagen 5, 6, 7, 8 und 9 derart, dass die Festigkeitsträger 5a, 6a, 7a, 8a und 9a, beginnend bei der radial innersten Gürtellage 5, gemäß der Abfolge rechtssteigend - rechtssteigend - 0° - linkssteigend - linkssteigend verlaufen. Unter einer 0°-Gürtellage ist eine solche zu verstehen, in welcher die Festigkeitsträger zur Umfangsrichtung A-A unter einem Winkel γ verlaufen, welcher um höchsten ± 5° von der exakten 0°-Orientierung abweicht. Der Winkel α der Festigkeitsträger 5a in der ersten Gürtellage 5 beträgt 35° bis 70°, insbesondere 43° bis 57°, der Winkel β der Festigkeitsträger 6a in der zweiten Gürtellage 6 beträgt 14° bis 30°, der Winkel δ der Festigkeitsträger 8a in der vierten Gürtellage 8 beträgt 14° bis 30° und der Winkel ϕ der Festigkeitsträger 9a in der Gürtellage 9 beträgt 35° bis 70°, insbesondere 43° bis 57°. Wie bereits erwähnt sind die zweite Gürtellage 6 und die vierte Gürtellage 8 Arbeitslagen, ihre Festigkeitsträger verlaufen daher unter relativ kleinen Winkeln zur Umfangsrichtung.

Für einen erfindungsgemäßen Gürtelaufbau ist es wesentlich, dass die mittlere Gürtellage 7 eine 0°-Lage ist und dass die beiden jeweils radial innerhalb und radial außerhalb der 0°-Lage angeordneten Gürtellagen 5, 6 und 8, 9 jeweils übereinstimmende Steigungen aufweisen. Die 0°-Lage 7 kann bei einer alternativen Ausführungsform der Erfindung in axialer Richtung aus mehreren Teillagen aufgebaut sein, welche insbesondere jeweils aus Festigkeitsträgern spiralig gewickelt sind.

Bei einer weiteren alternativen, gesondert nicht dargestellten Ausführungsvariante sind die Gürtellagen derart ausgeführt, dass ihre Festigkeitsträger, beginnend bei der ersten, der radial innersten Gürtellage, derart relativ zur Umfangsrichtung A-A geneigt sind, dass sie in den beiden radial innersten Gürtellagen links steigend und in den beiden radial äußersten Gürtellagen rechtssteigend verlaufen. Ansonsten entspricht diese nicht gezeigte Ausführung, insbesondere auch bezüglich der Größen der erwähnten Winkel α, β, γ, δ und ϕ der beschriebenen und in Fig. 1 und Fig. 2 dargestellten Ausführungsform.

Die Festigkeitsträger in den beiden Arbeitslagen 6 und 8, vorzugsweise auch in jene in den Gürtellagen 5 und 9, sind dehnbar, wobei unter "dehnbar" zu verstehen ist, dass die Festigkeitsträger im fertig vulkanisierten Reifen eine Dehnung ≥ 0,2 % bei 10 % Bruchlast aufweisen. Die Dehnung wird daher an Festigkeitsträgern gemessen, die dem fertig vulkanisierten Reifen entnommen werden, wobei die Bestimmung der Dehnung gemäß ASTM D 2969 - 04 erfolgt.

Die 0°-Lage in erfindungsgemäßen Gürtelkonstruktionen bewirkt eine sehr gute Umfangssteifigkeit des Reifens im Laufstreifenbereich, was für einen gleichmäßigen Abrieb des Laufstreifens in den Schulterbereichen vorteilhaft ist. Die radial äußerste Gürtellage 9 mit Festigkeitsträgern, die zur Umfangsrichtung A-A unter einem Winkel ϕ von bis zu 70° verlaufen, sorgt für eine gute Quersteifigkeit, unterstützt einen gleichmäßigen Abrieb des Laufstreifens im mittleren Bereich und insgesamt einen geringen Laufstreifenabrieb.

### Bezugsziffernliste

- 1: Laufstreifen
- 2: Innenschicht
- 3: Karkasseinlage
- 4,: Gürtel
- 5, 6, 7, 8, 9: Gürtellage
- 5a, 6a, 7a, 8a, 9a: Festigkeitsträger
- A-A: Umfangsrichtung
- α, β, γ, δ ϕ: Winkel

## Patentansprüche

1. Fahrzeugluftreifen in Radialbauart für Nutzfahrzeuge, insbesondere Lastkraftwagen, Busse und Lastkraftwagenanhänger, mit einem fünflagigen Gürtel (4), dessen Gürtellagen (5, 6, 7, 8, 9) Festigkeitsträger (5a, 6a, 7a, 8a) enthalten, die in jeder Gürtellage (5, 6, 7, 8, 9) jeweils parallel zueinander verlaufen, wobei die dritte Gürtellage (7) eine 0°-Lage ist, deren Breite geringer ist als die Breite der an sie unmittelbar anschließenden Gürtellagen (6, 8), welche Arbeitslagen sind, wobei die Festigkeitsträger (6a, 8a) in den einen, der 0°-Lage (7) benachbarten Gürtellagen (5, 6, 8, 9) rechtssteigend und die Festigkeitsträger (5a, 6a, 8a, 9a) in den anderen der 0°-Lage (7) benachbarten Gürtellagen (5, 6, 8, 9) linkssteigend verlaufen und die beiden jeweils radial innerhalb und radial außerhalb der 0°-Lage (7) angeordneten Gürtellagen (5, 6; 8, 9) jeweils übereinstimmende Steigungen aufweisen, wobei der Winkel (ϕ), den die Festigkeitsträger (9a) in der fünften Gürtellage (9) mit der Umfangsrichtung (A-A) des Reifens einschließen, 35° bis 70° beträgt, und wobei die Festigkeitsträger in den beiden Arbeitslagen (6, 8) eine Dehnung ≥ 0,2% bei 10% Bruchlast aufweisen, wobei die Dehnung mit Festigkeitsträgern gemessen wird, die dem fertig vulkanisierten Reifen entnommen sind,
**dadurch gekennzeichnet,**
**dass** in der ersten Gürtellage (5) Festigkeitsträger (5a) verlaufen, deren Dehnung bei 10 % Bruchlast ≥ 0,2 % beträgt, wobei die Dehnung ebenfalls mit Festigkeitsträgern gemessen wird, die dem fertig vulkanisierten Reifen entnommen sind.

2. Fahrzeugluftreifen nach Anspruch 1, **dadurch gekennzeichnet** das die dritte Gürtellage (7) in axialer Richtung aus mehreren Teillagen besteht.

3. Fahrzeugluftreifen nach Anspruch 1 oder 2, **dadurch gekennzeichnet, dass** der Winkel (ϕ), den die Festigkeitsträger (9a) in der fünften Gürtellage (9) mit der Umfangsrichtung (A-A) einschließen, mindestens 43° beträgt.

4. Fahrzeugluftreifen nach einem der Ansprüche 1 bis 3, **dadurch gekennzeichnet, dass** die Festigkeitsträger (6a, 8a) in der zweiten und in der vierten Gürtellage (6, 8) mit der Umfangsrichtung (A-A) jeweils einen Winkel (β, δ) einschließen, welcher 14° bis 30° beträgt.

5. Fahrzeugluftreifen nach einem der Ansprüche 1 bis 4, **dadurch gekennzeichnet, dass** die Festigkeitsträger (5a) in der ersten Gürtellage (5) mit der Umfangsrichtung (A-A) einen Winkel (α) einschließen, welcher 35° bis 70°, insbesondere mindestens 43°, beträgt.

6. Fahrzeugluftreifen nach einem der Ansprüche 1 bis 5, **dadurch gekennzeichnet, dass** die Festigkeitsträger (8a, 9a) in der vierten und der fünften Gürtellage (8, 9) rechtssteigend verlaufen.

7. Fahrzeugluftreifen nach einem der Ansprüche 1 bis 6, **dadurch gekennzeichnet, dass** in der fünften Gürtellage (9) Festigkeitsträger (9a) verlaufen, deren Dehnung bei 10% Bruchlast ≥ 0,2 % beträgt, wobei die Dehnung mit Festigkeitsträgern gemessen wird, die dem fertig vulkanisierten Reifen entnommen sind.

8. Fahrzeugluftreifen nach einem der Ansprüche 1 bis 7, **dadurch gekennzeichnet, dass** die fünfte Gürtellage (9) eine Breite von mindestens 60 % und höchstens 140 % der Breite der dritten Gürtellage (7) aufweist.

## Claims

1. Pneumatic vehicle tyre of radial design for commercial vehicles, in particular trucks, buses and truck trailers, having a five-ply belt (4), the belt plies (5, 6, 7, 8, 9) of which contain reinforcements (5a, 6a, 7a, 8a), which run parallel to each other in each belt ply (5, 6, 7, 8, 9), wherein the third belt ply (7) is a 0° ply, the width of which is less than the width of the directly adjacent belt plies (6, 8), which are working plies, wherein the reinforcements (6a, 8a) in one belt ply (5, 6, 8, 9) that is adjacent to the 0° ply (7) slope upward to the right and the reinforcements (5a, 6a, 8a, 9a) in the other belt ply (5, 6, 8, 9) that is adjacent to the 0° ply (7) slope upward to the left, and the two belt plies (5, 6; 8, 9) arranged respectively radially inside and radially outside the 0° ply (7) have respectively corresponding gradients, wherein the angle (ϕ) which the reinforcements (9a) in the fifth belt ply (9) enclose with the circumferential direction (A-A) of the tyre is 35° to 70°, and wherein the reinforcements in the two working plies (6, 8) have an elongation of ≥ 0.2% at 10% of the breaking load, wherein the elongation is measured using reinforcements taken from the fully vulcanized tyre,
**characterized**
**in that** reinforcements (5a), the elongation of which at 10% of the breaking load is ≥ 0.2%, run through the first belt ply (5), wherein the elongation is likewise measured using reinforcements taken from the fully vulcanized tyre.

2. Pneumatic vehicle tyre according to Claim 1, **characterized in that** the third belt ply (7) comprises a plurality of partial plies in the axial direction.

3. Pneumatic vehicle tyre according to Claim 1 or 2, **characterized in that** the angle (ϕ) which the reinforcements (9a) in the fifth belt ply (9) enclose with the circumferential direction (A-A) is at least 43°.

4. Pneumatic vehicle tyre according to one of Claims 1 to 3, **characterized in that** the reinforcements (6a, 8a) in the second and in the fourth belt ply (6, 8) each enclose an angle (β, δ) of 14° to 30° with the circumferential direction (A-A).

5. Pneumatic vehicle tyre according to one of Claims 1 to 4, **characterized in that** the reinforcements (5a) in the first belt ply (5) enclose an angle (α) of 35° to 70°, in particular at least 43°, with the circumferential direction (A-A).

6. Pneumatic vehicle tyre according to one of Claims 1 to 5, **characterized in that** the reinforcements (8a, 9a) in the fourth and the fifth belt ply (8, 9) slope upward to the right.

7. Pneumatic vehicle tyre according to one of Claims 1 to 6, **characterized in that** reinforcements (9a), the elongation of which at 10% of the breaking load is ≥ 0.2%, run through the fifth belt ply (9), wherein the elongation is measured using reinforcements taken from the fully vulcanized tyre.

8. Pneumatic vehicle tyre according to one of Claims 1 to 7, **characterized in that** the fifth belt ply (9) has a width of at least 60% and at most 140% of the width of the third belt ply (7).

## Revendications

1. Pneumatique de véhicule à structure radiale pour véhicules utilitaires, en particulier pour camions, autobus et remorques de camions, présentant une ceinture (4) en cinq couches dont les couches de ceinture (5, 6, 7, 8, 9) contiennent des renforts (5a, 6a, 7a, 8a) qui s'étendent à chaque fois parallèlement les uns aux autres dans chaque couche de ceinture (5, 6, 7, 8, 9), la troisième couche de ceinture (7) étant une couche à 0° dont la largeur est inférieure à la largeur des couches de ceinture (6, 8) qui s'y raccordent immédiatement et qui sont des couches de travail, les renforts (6a, 8a) dans certaines couches de ceinture (5, 6, 8, 9) voisines de la couche (7) à 0° présentant une pente montant vers la droite et les renforts (5a, 6a, 8a, 9a) présents dans les autres couches de ceinture (5, 6, 8, 9) voisines de la couche (7) à 0° présentant une pente montant vers la gauche et les deux couches de ceinture (5, 6; 8, 9) disposées à chaque fois radialement à l'intérieur et radialement à l'extérieur de la couche (7) à 0° présentant chacune des pentes correspondantes, l'angle (ϕ) formé par les renforts (9a) dans la cinquième couche de ceinture (9) avec la direction périphérique (A-A) du pneumatique étant compris entre 35° et 70° et les renforts présents dans les deux couches de travail (6, 8) présentant à 10 % de la charge de rupture un allongement ≥ 0,2 %, l'allongement étant mesuré sur des renforts prélevés dans le pneumatique vulcanisé prêt à l'emploi,
**caractérisé en ce que**
des renforts (5a) dont l'allongement à 10 % de la charge de rupture est ≥ 0,2 % s'étendent dans la première couche de ceinture (5), l'allongement étant également mesuré sur des renforts prélevés dans le pneumatique vulcanisé prêt à l'emploi.

2. Pneumatique de véhicule selon la revendication 1, **caractérisé en ce que** la troisième couche de ceinture (7) est constituée de plusieurs couches partielles dans la direction axiale.

3. Pneumatique de véhicule selon la revendication 1 ou 2, **caractérisé en ce que** l'angle (ϕ) formé par les renforts (9a) dans la cinquième couche de ceinture (9) avec la direction périphérique (A-A) vaut au moins 43°.

4. Pneumatique de véhicule selon l'une des revendications 1 à 3, **caractérisé en ce que** les renforts (6a, 8a) dans la deuxième et dans la quatrième couche de ceinture (6, 8) forment avec la direction périphérique (A-A) à chaque fois un angle (β, δ) compris entre 14° et 30°.

5. Pneumatique de véhicule selon l'une des revendications 1 à 4, **caractérisé en ce que** les renforts (5a) dans la première couche de ceinture (5) forment avec la direction périphérique (A-A) un angle (α) compris entre 35° et 70° et en particulier d'au moins 43°.

6. Pneumatique de véhicule selon l'une des revendications 1 à 5, **caractérisé en ce que** les renforts (8a, 9a) dans la quatrième et la cinquième couche de ceinture (8, 9) s'étendent sous une pente une pente à angle droit.

7. Pneumatique de véhicule selon l'une des revendications 1 à 6, **caractérisé en ce que** des renforts (9a) dont l'allongement à 10 % de la charge de rupture est ≥ 0,2 % s'étendent dans la cinquième couche de ceinture (9), l'allongement étant mesuré sur des renforts prélevés dans le pneumatique vulcanisé prêt à l'emploi.

8. Pneumatique de véhicule selon l'une des revendications 1 à 7, **caractérisé en ce que** la cinquième couche de ceinture (9) présente une largeur qui représente au moins 60 % et au plus 140 % de la largeur de la troisième couche de ceinture (7).
